# EUROPEAN PATENT APPLICATION

(11) **EP 0 967 067 A1**
(43) Date of publication of application: **29.12.1999**
(21) Application number: 96943343.2
(22) Date of filing: 27.12.1996
(51) Int. Cl.: B29C 69/00, B29C 71/00

(54) **MOLDLESS MOLDING METHOD USING NO MOLD AND APPARATUS THEREFOR**

(30) Priority: 31.12.1995 JP 35408095
(71) Applicant: Shinko Sellbic Co., Ltd., Tokyo 143 (JP)
(72) Inventor: TAKEUCHI, Hiroshi, Tokyo 143 (JP)
(74) Representative: Ben-Nathan, Laurence Albert
(86) International application number: JP9603883
(87) International publication number: WO9724217

(57) **Abstract**

This invention relates to a moldless molding technique for producing three-dimensional articles from fluidized molding material without using a mold.

The molding method of the invention comprises feeding fluidized molding material P onto a work table 11 so as to form a lump of molding material having volume approximately amounting to the outside profile of the entire article and a shape resembling in outside profile to the article, solidifying the molding material on the work table 11, and carving the solidified molding material into a desired article.

According to the invention, a highly precise article can be produced in a short time by carving unnecessary portions of the solidified molding material by using an NC machine tool or the like. The moldless molding apparatus according to the invention can be easily constructed at a low cost by selectively using existing NC machining tool, molding material feeding device, molding material unifying device and so on. Thus, this invention is suitable for not only forming the three-dimensional molded articles (products, sample articles and so forth) from fluidized molding material without using any mold, but also producing a mold by using various kinds of molding materials.

## Description

### [Technical Field]

This invention relates to moldless molding for producing molded articles having three-dimensional structure from fluidized molding material without using any mold.

### [Background Art]

In general, in order to produce molded articles having three-dimensional structure from fluidized molding material, there has been so far fulfilled a molding method comprising feeding the fluidized molding material into a physical mold for physically shaping the article to be molded, and then, solidifying the fluidized molding material within the mold into a desired shape. However, designing and manufacturing of the physical mold as used in the conventional molding method requires much time and entails enormous cost. The physical mold is unsuitable except where molded articles are mass produced. Thus, it has been attempted to produce molded articles having three-dimensional structure from fluidized molding material without using any mold.

As one example of producing the molded articles without using a mold, there has been conventionally known a moldless molding method which makes use of a flame spray coating in a painting art. The conventional moldless molding method comprises providing on a controller for a flame spray gun for spraying fluidized (molten) molding material with material feeding data prescribed on subdivided segments into which an imaginary article model to be molded is sliced, and spraying the molding material into each sliced segment in order, consequently to obtain the desired article.

However, the conventional moldless molding method as noted above is limited in thinly slicing the imaginary article model and accurately controlling the spraying angle, amount and timing of the spray gun for spraying the molding material. As a result, the accuracy of molding the article is not satisfactory. Besides, the conventional moldless molding method is disadvantageous in that it takes considerable length of time to completely mold the article, because the fluidized molding material is heaped little by little (by an extremely small quantity).

Another molding method using a light beam is described in Japanese Patent Application Public Disclosure No. SHO 56-144478(A). This prior art light molding method employs a work table movable vertically in ultraviolet curing resin, and a laser beam, and is carried out by solidifying the ultraviolet curing resin in the form of slices with irradiation of the laser beam. Consequently, a layer-built molded article formed of slices of the solidified resin is obtained.

The conventional light molding method noted above has not been used widely because raw materials are limited to ultraviolet curing resin and photosensitive resin. Moreover, since the layer-built molded article is made of slice layers formed straightly by the laser beam, the curved surface of the molded article cannot be smoothly formed precisely.

The present invention is made to eliminate the drawbacks suffered by the conventional moldless molding apparatuses and has an object to provide a moldless molding method comprising simple processes of overlaying and carving molding material and capable of producing highly accurate molded articles for in a short time, and a moldless molding apparatus capable of suitably performing the moldless molding method.

### [Description of the Invention]

To attain the object described above according to the present invention, there is provided a moldless molding method which comprises feeding fluidized molding material so as to form a lump of molding material having a shape including an entire article to be molded and resembling in outline shape to the article, solidifying the molding material, and carving the solidified molding material into the desired article (first embodiment).

According to this method, the desired article can be obtained by chipping off unnecessary portions out of the lump of solidified molding material having the volume approximately amounting to the outside profile of the article. As the molding material, synthetic resin easy to fluidize, plasticized material such as of rubber, low-fusible metallic material such as solder, ceramic material and so on may be used.

A second embodiment of the invention provide a moldless molding method which comprises feeding and solidifying a lump of fluidized molding material having a shape including a part of an article to be molded and resembling in outside profile to the part of the article, carving the solidified lump of molding material placed on a work table to make an intermediate product, overlaying and solidifying fluidized molding material on the intermediate product so as to form a lump of molding material having the volume approximately amounting to the outside profile of the article so as to cover a part of the article to be molded and resembling in outline shape to a part of the article, carving the solidified molding material overlaid on the intermediate product, and repeating the processes thus effected one or more times.

According to this method of the second embodiment, the desired article can be obtained by forming the intermediate product from the lump of solidified molding material, which has the volume approximately amounting to the outside profile of the article, and chipping off unnecessary portions out of the lump of solidified molding material overlaid on the intermediate product. The fluidized molding material is repeatedly overlaid on the intermediate product and finally carved into the desired article. As the molding material, synthetic resin easy to fluidize, plasticized material such as of rubber, low-fusible metallic material such as solder, ceramic material and so on may be used.

A process of unifying the intermediate product and the molding material overlaid thereon may be added to the process of solidifying the molding material (third embodiment). According to this third embodiment, the molding material after solidified to be consequently unified with the intermediate product is carved into the desired article. As the molding material, synthetic resin easy to fluidize, plasticized material such as of rubber, low-fusible metallic material such as solder, ceramic material and so on may be used. The ceramic material may be formed by pressing so as to be well unified with the intermediate product by calcining.

A fourth embodiment of the invention provides a moldless molding method comprising feeding onto a work table a rod-shaped or plate-like molding material having a shape including an entire article to be molded, melting or plasticizing the molding material into a lump resembling to the outside profile of the article, and carving the molding material into the desired article.

In this embodiment, the rod-shaped or plate-like molding material is fed onto the work table by use of an ordinary feeding mechanism and melted or plasticized into a lump resembling in outline shape to the article to be molded. As the molding material, there may be used even a metallic material which cannot easily be fluidized by use of simple equipment. Of course, synthetic resin, plasticized material such as of rubber or the like may be used as the molding material. Instead of the rod-shape or plate-like molding material, a slender molding material shaped in a strap or string may be used in this embodiment. The shape of the plate-like molding material is not limited to a flat plate. That is, the molding material may be formed into a plane sheet such as a film, membrane irrespective of its thickness. The melting of the molding material in this fourth embodiment serves to unite the molecules of the metallic molding material with one another. The plasticizing of the molding material in this embodiment comprehends plasticization of plasticized material such as synthetic resin and rubber, and can be fulfilled by welding or ultrasonic vibration.

A process of overlaying the molding material on an intermediate product may be adopted in the fourth embodiment (fifth embodiment). Thus, the intermediate product is repeatedly covered with the rod-shaped or plate-like molding material melted or plasticized and carved, consequently to produce the desired article.

Additionally, to attain the object described above according to this invention, there is further provided a moldless molding apparatus comprising an NC machining tool for carving solidified molding material into a molded article, and a material feeding device for feeding fluidized molding material onto a material reception position defined on a work table of the NC machining tool or overlaying the fluidized molding material on an intermediate product placed on the work table (sixth embodiment). Thus, the moldless molding apparatus of the invention can be constituted by attaching the material feeding device to the NC machining tool. As the material feeding device, a plasticization-type or fluidization-type feeding mechanism capable of easily fluidizing the molding material may be used.

A seventh embodiment of the invention provides a moldless molding apparatus which comprises an NC machining tool for carving solidified molding material into a molded article, and a material feeding device connected to a controller of the NC machining tool so as to feed fluidized molding material onto a work table of the NC machining tool or overlay the fluidized molding material on an intermediate product placed on the work table. Thus, the material feeding device in this embodiment is controlled by the controller of the NC machining tool so as to operated in conjunction with the NC machining tool integrally connected thereto. By alternatively effecting the material feeding and the NC processing, the molding material is repeatedly overlaid on the intermediate product and carved, consequently to form the desired molded article.

An eighth embodiment of the invention provides a moldless molding apparatus comprising an NC machining tool for carving solidified molding material into a molded article, and a material feeding device equipped on a tooling system for selectively operating components in the NC machining tool so as to feed fluidized molding material onto a work table of the NC machining tool or overlay the fluidized molding material on an intermediate product placed on the work table. The material feeding device is subject to NC control by use of the NC machining tool integrally united therewith through the tooling system. By alternatively effecting the material feeding and the NC processing, the molding material is repeatedly overlaid on the intermediate product and carved, consequently to form the desired molded article.

A ninth embodiment of the invention provides a moldless molding apparatus comprising an NC machining tool for carving solidified molding material into a molded article, and a material feeding device attached to a robot arm controlled independent of the NC machining tool so as to feed fluidized molding material onto a work table of the NC machining tool or overlay the fluidized molding material on an intermediate product placed on the work table. The material feeding device is independent of the NC machining tool so as to be controlled independent of the NC machining tool for performing NC control, so as to repeatedly carve the molding material overlaid on the intermediate product, consequently to form the desired molded article.

A tenth embodiment of the invention provides a moldless molding apparatus comprising an NC machining tool for carving molding material into a molded article, a material feeding device for feeding fluidized molding material onto a material reception position defined on a work table of the NC machining tool or overlaying the fluidized molding material on an intermediate product placed on the work table, and a material unifying mechanism connected to a controller of the NC machining tool so as to unify the intermediate product and the molding material to be overlaid on the intermediate product when feeding the molding material onto the intermediate product under the control of the controller of the NC machining tool. Thus, the material feeding device and the material unifying mechanism are controlled by the controller of the NC machining tool, so that the material feeding device, the material unifying mechanism, and the NC machining tool are operatively associated with one another. When the molding material is fed onto the intermediate product, it is unified with the intermediate product and then carved into the desired article by the repetitive NC process.

An eleventh embodiment of the invention provides a moldless molding apparatus comprising an NC machining tool for carving molding material into a molded article, a material feeding device for feeding a rod-shaped or plate-like molding material onto a material reception position defined on a work table of the NC machining tool or overlaying the fluidized molding material on an intermediate product placed on the work table, and a material unifying mechanism connected to a controller of the NC machining tool so as to unify the intermediate product and the rod-shaped or plate-like molding material which is melted or plasticized so as to be formed into a lump resembling to the outside profile of the article. The material feeding device for feeding the rod-shaped or plate-like molding material and the material unifying mechanism are controlled by the controller of the NC machining tool, so that the material feeding device, the material unifying mechanism, and the NC machining tool are operatively associated with one another. When the molding material is fed onto the intermediate product, it is unified with the intermediate product and then carved into the desired article by the repetitive NC process.

### [Brief Explanation of the Drawings]

FIG. 1 is a perspective view showing the initial state of the operation (processes) in the moldless molding method and apparatus of the first to third embodiments and the sixth to eight embodiments according to this invention.
FIG. 2 is a perspective view showing the operation (process) subsequent to the process of FIG. 1.
FIG. 3 is a perspective view showing the operation (process) subsequent to the process of FIG. 2.
FIG. 4 is a perspective view showing the operation (process) subsequent to the process of FIG. 3.
FIG. 5 is a perspective view showing the initial state of the operation (processes) in the moldless molding method and apparatus of the fourth and fifth embodiments and the ninth embodiment according to the present invention.
FIG. 6 is a perspective view showing the operation (process) subsequent to the process of FIG. 5.
FIG. 7 is a perspective view showing the operation (process) subsequent to the process of FIG. 6.
FIG. 8 is a perspective view showing the operation (process) subsequent to the process of FIG. 7.
FIG. 9 is a perspective view showing the moldless molding apparatus of the eighth embodiment according to this invention.
FIG. 10 is a perspective view showing the moldless molding apparatus of the ninth embodiment according to this invention.

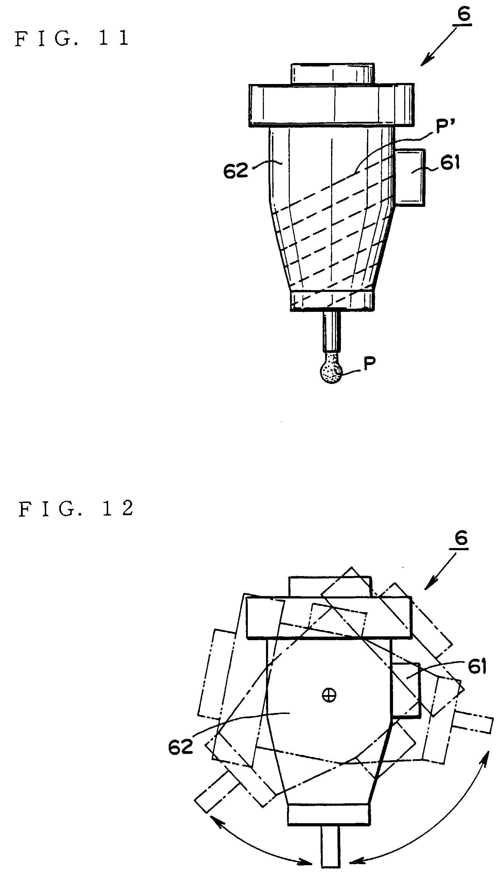

FIG. 11 is a front view showing the principal portion of FIG. 1.
FIG. 12 is a diagram showing the operation of the apparatus of FIG. 11.

### [Best Mode for carrying out the Invention]

The moldless molding method and apparatus according to the present invention will be described hereinafter with reference to the accompanying drawings.

First, the moldless molding apparatuses of the sixth, seventh and tenth embodiments will be explained.

These embodiments each comprise an existing NC (numerical control) machining tool 1, a material feeding device 2, and a material unifying mechanism 3 in combination. The moldless molding apparatus can be manufactured at a low cost with ease.

The NC machining tool 1 includes a work table 11 on which molding material P to be processed is placed, a work table driving unit 12 for moving the work table 11, a tooling unit 13 having a carving tool and so on for carving the molding material P, a tooling unit driving unit (not shown) for moving the tooling unit 13, and a controller 14 electrically connected to the work table driving unit 12, tooling unit 13 and tooling unit driving unit so as to subject these units to NC control.

The material feeding device 2 includes a main body 21 for fluidizing the molding material P, and a nozzle 22 mounted on the point end of the main body 21 to discharge the fluidized molding material P therefrom. The main body 21 has a function of plasticizing, shearing or fluidizing the molding material P in accordance with the characteristics of the molding materials (synthetic resin, rubber, metallic material, ceramic material, and so on). The nozzle 22 has a function of squeezing out or forcibly discharging the fluidized molding material P in accordance with the characteristics and fluidized state of the molding material. As one example of the material feeding device, a microminiature material feeding device as disclosed in Japanese Patent Application No. HEI 7-225587 (Publication No. 08156070) filed in the name of the applicant of this invention may be used.

The material feeding device 2 is fixed at the material reception position defined for receiving the molding material P in the NC machining tool 1, so as to feed the molding material P onto the work table 11 at the material reception position. The material feeding device 2 is electrically connected to the controller 14 of the NC machining tool 1 so as to subject the device to NC control to control the timing of feeding the molding material P and the quantity of the molding material to be fed.

The material unifying mechanism 3 is disposed close to the nozzle 22 of the material feeding device 2 and movable with the position of the molding material applied onto the work table. The material unifying mechanism 3 is electrically connected to the controller 14 of the NC machining tool 1 so as to subject the device to NC control to control the timing of feeding the molding material P and the quantity of the molding material applied on the work table. As the material unifying mechanism 3, for example, an ultrasonic welding mechanism 30 may be used. The ultrasonic welding mechanism 30 has a horn 31 arranged perpendicularly under the nozzle 22, so as to be located between the intermediate product and the molding material overlaid on the intermediate product.

On the basis of the foregoing explanation of the handling and operation of the moldless molding apparatuses of the sixth, seventh and tenth embodiments, the moldless molding apparatuses of the first to third embodiments will be described hereinafter.

Prior to the use of the moldless molding apparatuses of these embodiments, information data as to the structure of an article D to be molded and processing conditions therefor are inputted to the controller 14 of the NC machining tool 1 in advance.

Then, the work table 11 is moved to the material reception position A for receiving the molding material P by operating the work table driving unit 12 of the NC machining tool 1.

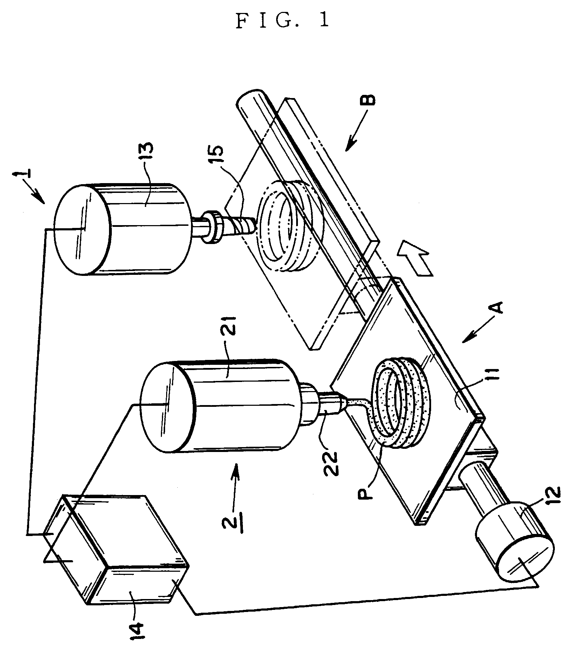

At the material reception position A, the fluidized molding material P is discharged into the form of a strap from the nozzle 22 of the material feeding device 2, and placed like a coil on the work table 11, as shown in FIG. 1. The lump of the molding material P on the work table has a shape including an entire article to be molded and resembling in outline shape to the article. If an intermediate product Da having a cylindrical shape is required, the strap-shaped molding material is spirally placed on the work table to form a cylindrical lump of molding material. The fluidized molding material P may be discharged from the nozzle 22 of the material feeding device 2 onto the work table 11 at a moderate feeding speed and temperature determined in accordance with the characteristics such as viscosity of the molding material P.

Next, the work table 11 is moved to a working position B at which the molding material P on the work table is carved.

As the work table 11 moves from the material reception position A toward the working position B, the fluidized molding material solidifies on the work table 11. In the case of using, for example, a string of ABS resin as the molding material P, the molding material will solidify in about 5 seconds at a normal temperature.

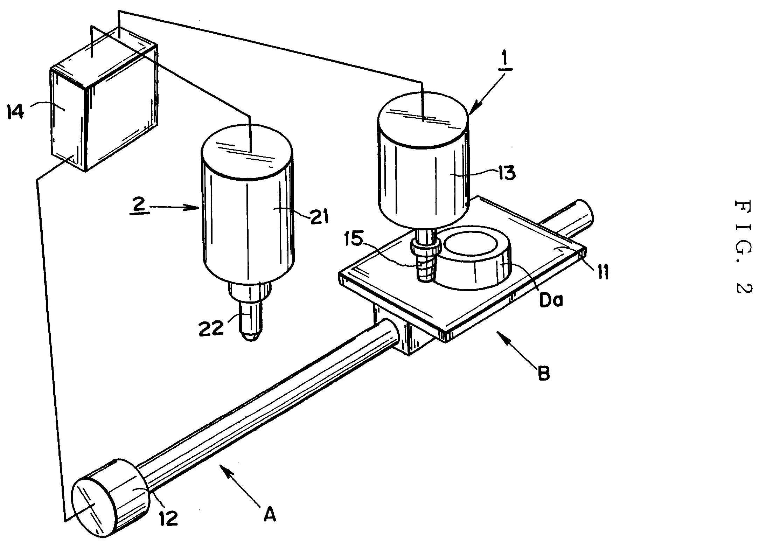

As shown in FIG. 2, the molding material P solidified on the work table is processed by a grinding tool 15 attached to the tooling unit 13 which is moved around the molding material P formed into a lump by a tooling unit driving means which is not shown in the drawing. In this process for reducing the volume of the molding material, the massive molding material P solidified is carved into an intermediate product Da (cylindrical shape). This carving process is carried out very precisely by the controller 14 performing the NC control and finished in a short time.

Successively, the work table 11 is returned to the material reception position A by operating the work table driving unit 12.

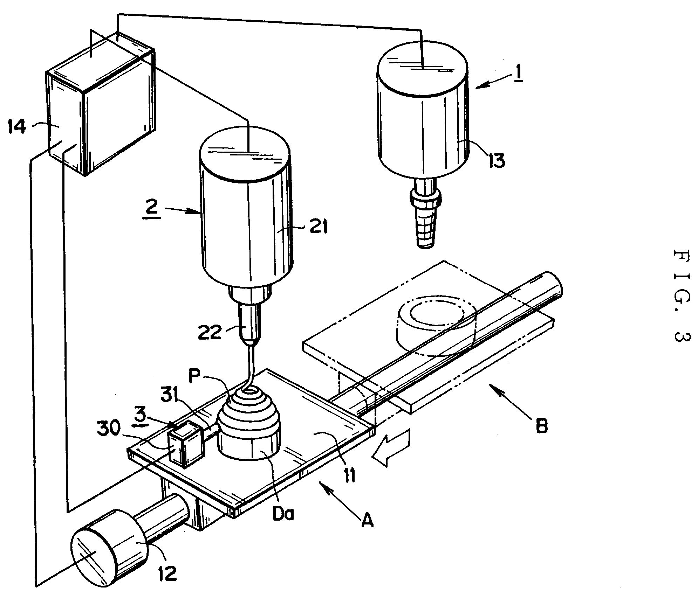

At the material reception position A to which the work table 11 returns, fluidized molding material P is further fed from the nozzle 22 of the material feeding device 2 onto the intermediate product Da which has already been formed into a lump from the molding material P, so as to overlay the molding material on the intermediate product as shown in FIG. 3. The massive molding material P is sufficient in volume for enveloping the intermediate product Db forming a part of the final article D to be molded, and has a shape resembling to the outline shape of the intermediate product Db.

At the material reception position A, the intermediate product Da and the overlay of the molding material P newly fed thereonto are entirely unified by using the ultrasonic welding mechanism 30 producing an ultrasonic welding effect. The ultrasonic welding brought about by the ultrasonic welding mechanism 30 is carried out while moving the work table 11 relative to the ultrasonic welding mechanism 30. The ultrasonic welding is effected between the intermediate product Da and the molding material P in the course of solidification which is overlaid on the intermediate product. Of course, the intermediate product Da and the overlay of the molding material P may be unified before solidification of the molding material.

Successively, the work table driving unit 12 is operated to again move the work table 11 to the working position B for carving the molding material P thereat.

While the work table 11 moves from the material reception position A toward the working position B, the massive molding material P overlaid on the intermediate product Da solidifies.

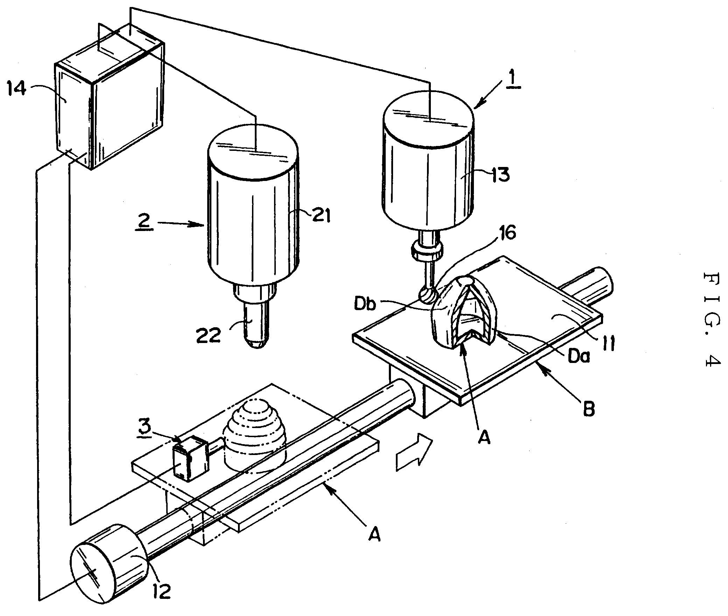

At the working position B, as shown in FIG. 4, the solidified massive molding material P is processed by the tooling unit 13 which is moved round the molding material P by the tooling unit driving means which is not shown in the drawing. This process can be carried out by replacing the tooling unit 13 with a tool 16. The carving process for reducing the volume of the molding material is carried out in the same way as described earlier, consequently to form another intermediate product Db (conical shape). This carving process is carried out very precisely by the controller 14 performing the NC control and finished in a short time.

The intermediate products Da and Db thus formed are unified into a molded article D. The molded article D as a final product is removed from the work table 11.

The aforementioned consecutive processes including the feeding, solidifying and carving of the molding material P may be repeated three or more times.

Next, the eleventh embodiment of the moldless molding apparatus according to this invention will be described. The identical components of this embodiment are denoted by like numerical symbols. The description of these components is omitted below to avoid repetition.

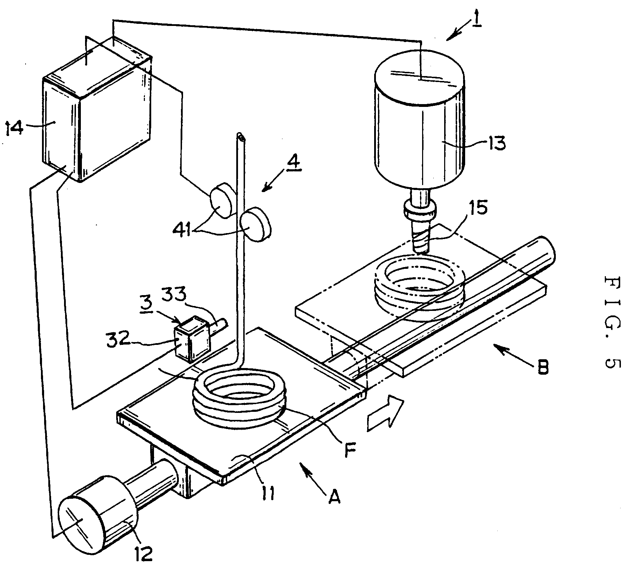

As shown in FIG. 5 through FIG. 8, this embodiment is constructed by combining a different material feeding device 4 with the NC machining tool 1 and the material unifying mechanism 3 seen in the aforementioned first to third embodiments and sixth to eighth embodiment.

The material feeding device 4 includes a mechanism 41 for continuously feeding a rod-shape or plate-like molding material F. When a strap-shaped molding material is used, feed rollers or the like may be used as the continuous feeding mechanism 41 as illustrated.

As the material unifying mechanism 3, for example, a welding machine 32 may be used. The welding machine 32 has a nozzle 33 arranged perpendicularly under the continuous feeding mechanism 41 and is placed close to the molding material. As the welding machine 32, an electric welding machine, argon arc welding machine, oxy-arc welding machine or the like may be used.

Next, on the basis of the foregoing explanation of the handling and operation of the moldless molding apparatuses of the eleventh embodiment, the moldless molding apparatuses of the fourth and fifth embodiments will be described.

At the material reception position A, as shown in FIG. 5, as a metallic wire is fed from the continuous feeding mechanism 41 of the material feeding device 4, the metallic wire is fused with the nozzle 33 of the welding device 32 and spirally placed on the work table. Consequently, a massive molding material is formed on the work table 11. It is preferable to arrange a plurality of not-shown welding devices like the welding device 32 at the portions at which the molding material is bent and wound. The massive molding material F formed on the work table has the volume sufficient for enveloping an intermediate product Da forming a part of the final article D to be molded, and is resemble in shape to the outline shape of the intermediate product Da. In a case that the intermediate product Da is cylindrical, the molding material is formed into a cylinder shape by controlling the relative movement of the work table 11 and the nozzle 33.

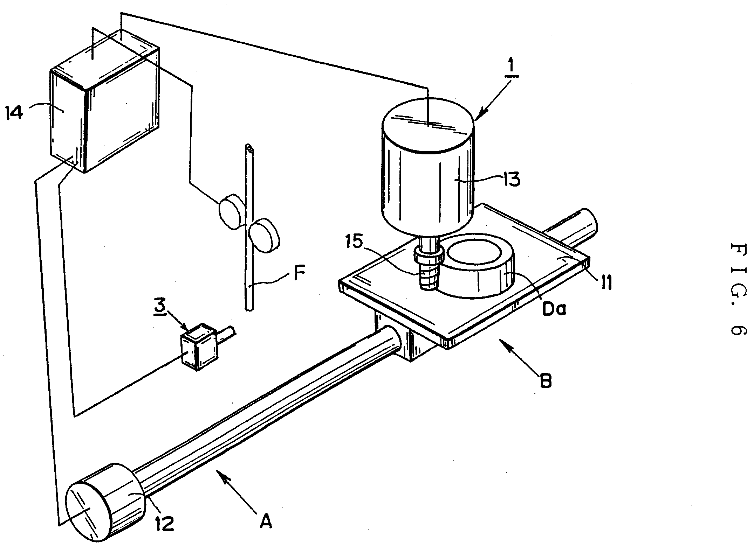

Successively, the work table 11 is returned to the material reception position A as shown in FIG. 5 and FIG. 6.

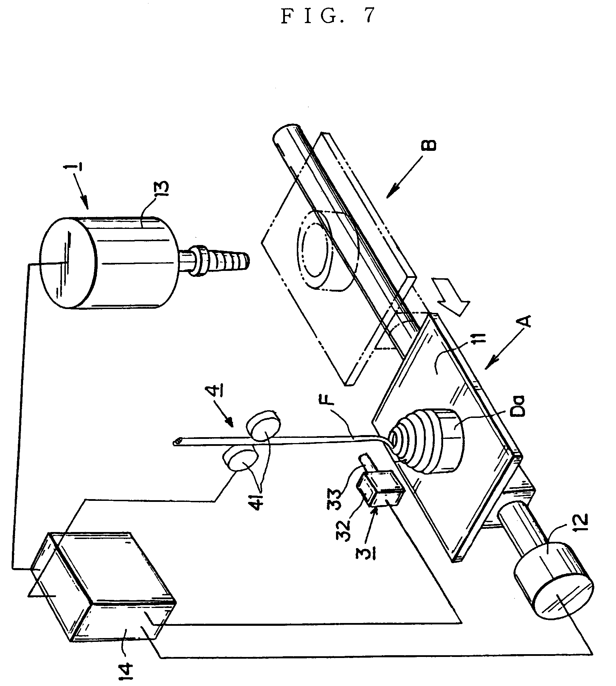

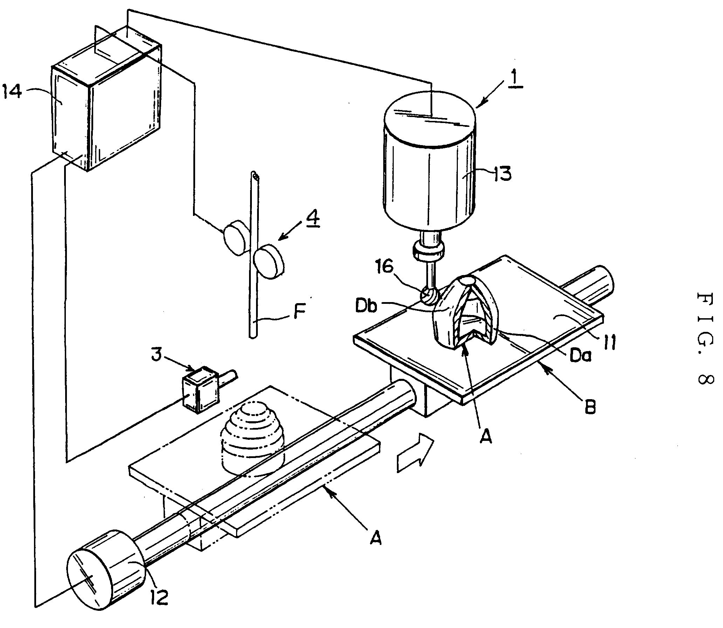

At the material reception position A to which the work table 11 returns, as shown in FIG. 7, a metallic wire is newly fed from the continuous feeding device 41 while being melted or fused by using the nozzle 33 of the welding device 32 to overlay the molding material F on the intermediate product Da. The massive molding material F is sufficient in volume for enveloping the intermediate product Db forming a part of the final article D to be molded, and has a shape resembling to the outline shape of the intermediate product Db. As shown in FIG. 8, the molding material is repeatedly carved into a final molded article. Incidentally, in the fourth embodiment, the final molded article is formed in one process of feeding and carving the molding material.

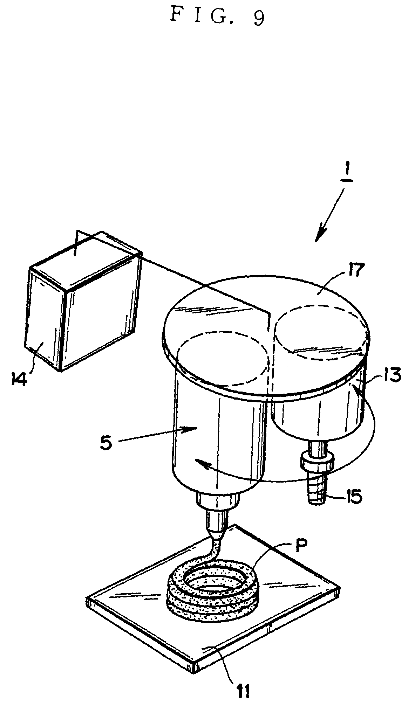

In the eighth embodiment shown in FIG. 9, the material feeding device 5 is provided with a tooling system 17 for selectively operating the tooling unit 13 of the NC machining tool 1. The material feeding device 5 in this embodiment is directly controlled by the controller 14 of the NC machining tool 1.

In this eighth embodiment, the tooling unit 13 of the NC machining tool 1 and the material feeding device 5 are selectively switched over to each other. According to this embodiment, the NC machining tool 1 and the material feeding device 5 can be integrated intimately.

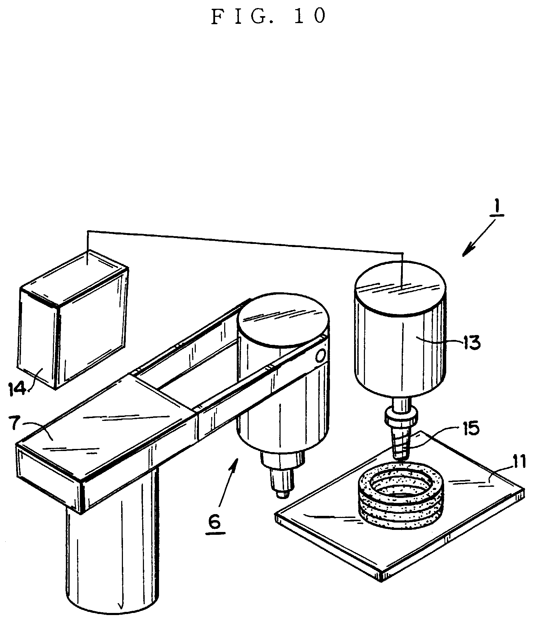

The ninth embodiment shown in FIG. 10 has a robot arm 7 provided with the material feeding device 6 which is controlled independent of the controller 14 of the NC machining tool 1.

In this ninth embodiment, the NC machining tool 1 and the material feeding device 6 can be operated simultaneously. That is, the molding material P can be fed from the material feeding device 6 onto the intermediate product Da so as to disturb the operation of the NC machining tool 1. According to this ninth embodiment, an existing lathe turning machine, milling machine, drilling machine and so on may be used to form the NC machining tool 1. The controller 14 of the NC machining tool 1 is not necessarily connected to a controller (not shown) of the robot arm 7, as the NC machining tool 1 can be operated in conjunction with the robot arm 7 by use of sensors provided on the robot arm 7.

In a case of using synthetic resin as the molding material P in the ninth embodiment, a strap- or string-like raw material P' may be wound around a material holder 61 and fluidized in a main body 62. With this mechanism, the material P can be securely fed from the main body 62 without falling away even when the material feeding device 6 is irregularly moved by the robot arm 7, so as to avoid the possibility of causing the pellet-like raw material P' to spill from the material feeding device.

Although the product (molded object) D resultantly formed by the aforementioned embodiments may be deemed as a finished article, it may be deemed as an intermediate product Da or Db so as to be further processed, or a dummy product (molded object) which is removed after forming a desired article.

The material feeding device 2 may be further provided with a driving unit for moving the material feeding device, which is electrically connected to the controller 14 of the NC machining tool 1, so that movement of the material feeding device 2 is subjected to NC control by the controller. According to this structure having the driving unit for moving the material feeding device, the material feeding device 2 or 4 is moved so that the molding material P can be fed at the working position B.

As another measure, it is possible to electrically connect the material feeding device 2 or 4 to the controller 14 of the NC machining tool 1, so as to control the feeding of the molding material P independently. According to this structure for controlling the feeding of the molding material independently, controlling program can be simplified.

Also, sets of the material feeding device 2 and tooling unit 13 may be arranged in a row in the feeding direction of the work table 11, so that production of the article can be fulfilled while forwarding the work table 11. The work table 11 movable in one direction along the components arranged in a row may be formed of or make supplementary use of a hoop means, or may be of a rotary type.

Although the embodiments having the work table 11 driven by the work table driving unit 12 are described above, the movement of the work table should not be understood as being limited thereto. It is of course possible to disposed the work table 11 between the NC machining tool 1 and the material feeding device 2 or 4 or the material unifying mechanism 3 so that it can move vertically or horizontally or rotate relative to the NC machining tool or other components.

The embodiments using the ultrasonic welding mechanism 30 or welding device 32 as the material unifying mechanism 3 have been discussed above. However, instead of these welding means, heating means such as a heater may be used to unifying the molding material. Although the foregoing embodiment having the ultrasonic welding machine 30 combined with the material feeding device 2 or the welding device 3 combined with the material feeding device 4 is described above, the combination may be changed.

As is apparent from the foregoing description, the moldless molding method according to this invention makes it possible to form a molded article by removing unnecessary parts from a molding material fed in a lump by use of the NC machining tool. Thus, the present invention brings about marked effects in that the molded article can be produced with a high precision in a short time. Furthermore, according to the present invention, the molding material can be used most efficiently without waste and carved quickly with a high accuracy, because the molding material is fed into a shape resembling in outside profile to the desired article to be molded. In particular, according to the invention, various kinds of molding materials can be used for producing not only molded articles or sample products, but also a molding die or mold.

Moreover, the moldless molding apparatus according to this invention can perform the moldless molding method of the invention without destroying the excellent effects brought about by the moldless molding method of the invention. Since the moldless molding apparatus of the invention can be constituted by the existing NC machining tool, material feeding device and/or material unifying mechanism as described above, the apparatus of the invention can be easily manufactured at a low cost.

### [Industrial Applicability]

The moldless molding method and moldless molding apparatus according to this invention make it possible to produce a molded article by removing unnecessary parts from a molding material fed in a lump by use of the NC machining tool. Thus, the molded article having three-dimensional structure can be suitably produced precisely in a short time without using a mold. The moldless molding method of the invention makes use of various kinds of molding materials for producing not only molded articles or sample products, but also a molding die or mold.

## Claims

1. A moldless molding method comprising feeding fluidized molding material into a lump of molding material having a shape including entirely an article to be molded and resembling in outline shape to the article, solidifying the molding material, and carving the solidified molding material into the article.

2. A moldless molding method comprising feeding and solidifying a lump of fluidized molding material having a shape including a part of an article to be molded and resembling in outside profile to the part of the article, carving the solidified lump of molding material placed on a work table to make an intermediate product, overlaying and solidifying fluidized molding material on the intermediate product to form a lump of molding material having volume approximately amounting to the outside profile of the article to cover a part of the article to be molded and resembling in outline shape to the part of the article, carving the solidified molding material overlaid on the intermediate product, and repeating the processes thus effected one or more times.

3. A moldless molding method comprising feeding and solidifying a lump of fluidized molding material having a shape including a part of an article to be molded and resembling in outside profile to the part of the article, carving the solidified lump of molding material placed on a work table to make an intermediate product, overlaying and solidifying fluidized molding material on the intermediate product to form a lump of molding material having volume approximately amounting to the outside profile of the article so as to cover a part of the article to be molded and resembling in outline shape to the part of the article, unifying the intermediate product and the molding material overlaid thereon, carving the solidified molding material overlaid on the intermediate product, and repeating the processes thus effected one or more times.

4. A moldless molding method comprising feeding onto a work table a rod-shaped or plate-like molding material having a shape including a part of an article to be molded, melting or plasticizing the molding material into a lump resembling to the outside profile of the article to unify the molding material with the article, and carving the molding material into a final article.

5. A moldless molding method comprising feeding onto a work table a rod-shaped or plate-like molding material having a shape including a part of an article to be molded and resembling in outside profile to a part of the article, solidifying the molding material fed onto the work table to form and unify a lump of molding material having volume approximately amounting to the outside profile of the article, carving the molding material into an intermediate product, unifying the intermediate product and the molding material overlaid thereon, further feeding and overlaying another rod-shaped or plate-like molding material on said intermediate product, solidifying the molding material overlaid on said intermediate product to form and unify a lump of molding material having a shape including a part of an article to be molded and resembling in outside profile to the part of the article, carving the solidified molding material overlaid on the intermediate product, and repeating the processes thus effected one or more times.

6. A moldless molding apparatus comprising an NC machining tool for carving molding material into a molded article, and a material feeding device for feeding fluidized molding material onto a material reception position defined on a work table of the NC machining tool or overlaying the fluidized molding material on an intermediate product placed on the work table.

7. A moldless molding apparatus comprising an NC machining tool for carving solidified molding material into a molded article, and a material feeding device connected to a controller of the NC machining tool to feed fluidized molding material onto a work table of the NC machining tool or overlay the fluidized molding material on an intermediate product placed on the work table.

8. A moldless molding apparatus comprising an NC machining tool for carving solidified molding material into a molded article, and a material feeding device equipped on a tooling system for selectively operating components in the NC machining tool to feed fluidized molding material onto a work table of the NC machining tool or overlay the fluidized molding material on an intermediate product placed on the work table.

9. A moldless molding apparatus comprising an NC machining tool for carving solidified molding material into a molded article, and a material feeding device attached to a robot arm controlled independent of the NC machining tool to feed fluidized molding material onto a work table of the NC machining tool or overlay the fluidized molding material on an intermediate product placed on the work table.

10. A moldless molding apparatus comprising an NC machining tool for carving molding material into a molded article, a material feeding device for feeding fluidized molding material onto a material reception position defined on a work table of the NC machining tool or overlaying the fluidized molding material on an intermediate product placed on the work table, and a material unifying mechanism connected to a controller of the NC machining tool to unify the intermediate product and the molding material to be overlaid on the intermediate product when feeding the molding material onto the intermediate product under the control of the controller of the NC machining tool.

11. A moldless molding apparatus comprising an NC machining tool for carving molding material into a molded article, a material feeding device for feeding a rod-shaped or plate-like molding material onto a material reception position defined on a work table of the NC machining tool or overlaying the fluidized molding material on an intermediate product placed on the work table, and a material unifying mechanism connected to a controller of the NC machining tool to unify the intermediate product and the rod-shaped or plate-like molding material melted or plasticized so as to be formed into a lump resembling to the outside profile of the article.
